Europäisches Patentamt

European Patent Office

Office européen des brevets

(11) Publication number: **0 248 969**
**A1**

## (12) EUROPEAN PATENT APPLICATION

(21) Application number: 86830158.1

(22) Date of filing: 10.06.86

(51) Int. Cl.4: **B65G 19/24**

(43) Date of publication of application:
16.12.87 Bulletin 87/51

(84) Designated Contracting States:
DE FR GB

(71) Applicant: MILLE S.N.C. DI BORGHI LAURA &
C.
Via Pradello, 7
I-45037 Melara (Rovigo)(IT)

(72) Inventor: Verzola, Lorenzo
Via Dante Alighieri, 16
Castelnovo Bariano (Rovigo)(IT)
Inventor: Borghi, Laura
Via Paradello, 7
Melara (Rovigo)(IT)

(74) Representative: Dall'Olio, Giancarlo
INVENTION s.n.c. Via Arienti 26
I-40124 Bologna(IT)

(54) Improved scraping conveyor chain.

(57) The scraping conveyor chain produced according to the present invention is designed to draw loose materials over a transportation channel 90, situated below.

The links of the chain are composed of plurality of plates arranged in pairs respectively internal 50 and external 60, with each pair connected to the one preceding it by means of a cylindrical pin 70, and fitted with a plurality of lateral pallets 65 perpendicular to the chain itself.

Each pallet is composed of a support plate 66 and a conveyor vane 67, and is mounted immovably to a corresponding link of the aforementioned chain by means of a fixed interlocking joint coupling between the relevant support plate and corresponding link using attachment means 80.

FIG.1

## "Improved scraping conveyor chain"

The present invention applies to the field of continuous conveyor systems using scraping conveyor chains located above the base of a transport channel to convey loose materials (cereals, granulates, chemical products). A known system existing on the market is a conveyor chain composed of vertical plates presenting a raised edge so as to constitute a pallet for scraping up the material to be transported; the said plates are coupled to one another using parallel cylindrical pins.

The main drawback caused by using this type of chain in present day scraping conveyors is due to the high level of friction to which the pallets are subjected, consequent upon their sliding over the transport channel beneath them, which results in the chain wearing out rapidly, since it is impossible to change single pallets independently of the chain.

Another drawback is related to the high operating costs of conveyors using chains of the known type; the said costs are principally caused by the low operating speed and high energy consumption resulting from the notable friction between the chain and transportation surface beneath it.

A further drawback arising from the use of scraping conveyor chains known in the field of continuous conveyors is the high noise level, resulting from the chain and pallets rubbing over the transportation surface.

The object of the present invention is to supply a scraping conveyor chain designed in such a way as to reduce, in comparison to known solutions, the friction due to the rubbing of the chain and pallets over the transportation surface, with consequently lower running costs due to lower wear, higher productivity (quantity of loose material conveyed over the same period of time), and lower energy consumption of the scraping conveyor system.

A further object of the present invention is to supply a scraping conveyor chain with a limited level of operating noise in comparison with those chains until today present on the market and fulfilling the same functions.

The above-mentioned objects are obtained by the invention through the use of a scraping conveyor chain designed to draw loose materials over a transportation channel situated below, characterised by the fact that it features a plurality of lateral pallets perpendicular to the chain links, with each pallet mounted immovably at one end to a corresponding link of the aforementioned chain.

The characteristics of the present invention are emphasised hereinafter with reference to the single set of accompanying drawings in which:

-figure 1 is a partially assembled and partially exploded view in perspective of the present improved chain;

-figure 2 is a plan of the present chain;

-figure 3 is a vertical cross-section along plane I-I in figure 2.

With reference to the said figures, 100 shows the present improved scraping conveyor chain designed to draw loose material along a transportation channel 90 below it.

The chain links are composed of a plurality of plates arranged in pairs respectively inner 50 and outer 60; connection of each pair of plates to those preceding them is effected by means of a cylindrical pin 70; consequently the motion of single elements of the chain relative to one another is solely constituted by rotation around the axes of the pins 70.

65 shows a synthetic resin pallet composed of a mounting plate 66 and a conveyor vane 67.

The said pallet 65 is designed to be perpendicularly coupled, using known means of attachment 80, to the corresponding external plate 60.

The above-mentioned mounting plate 66 features a central seat 10a for immoveably mounting (with a fixed interlocking joint) the same to the corresponding external plate 60.

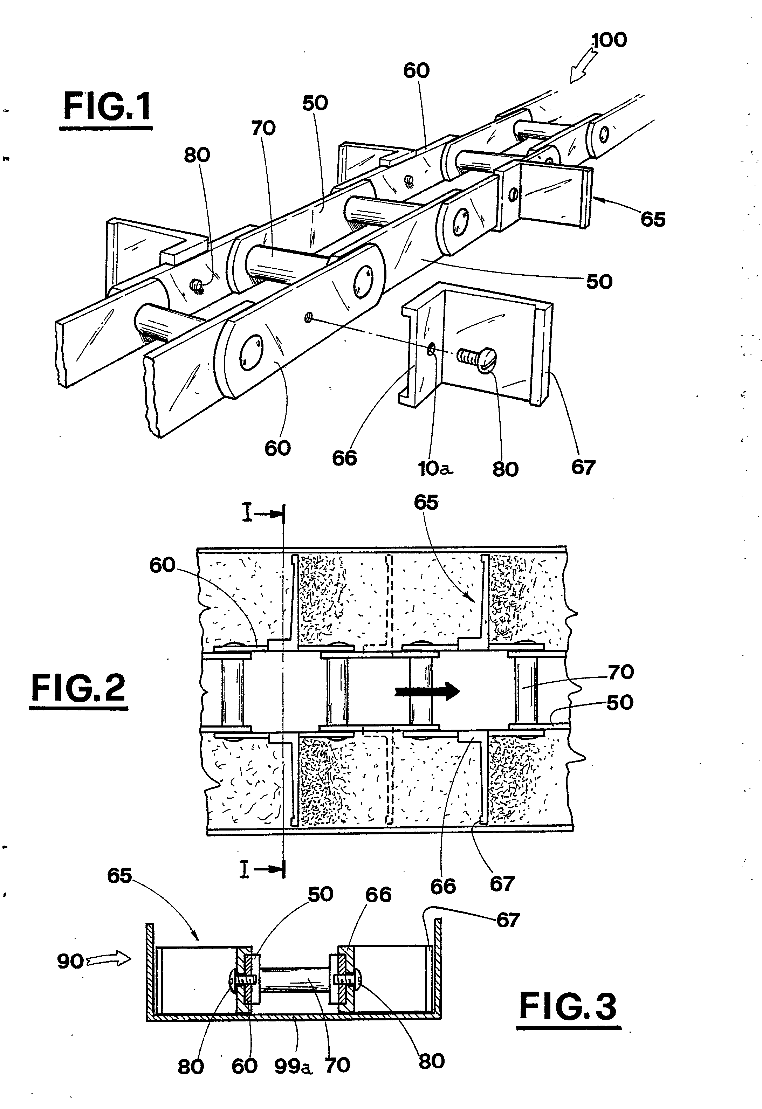

It should be emphasised that the height of the attachment plate 66 is greater than the height of the plate 60; in this way the links of the chain remain raised above the base 99a of the channel 90 situated below (fig. 3) and the loose material is drawn along solely by the scraping conveyor pallets 65.

The lack of friction between the chain links and the channel situated below brings many advantages; above all the increased operating speed and lower energy consumption of the conveyor machine using this type of chain. In the second place, using the chain described above in present day conveyor systems enables one to effect a notable reduction in the high noise levels present on these machines. Another advantage of the present invention arises from being able to replace the individual conveyor pallets independently of the entire chain, with a consequent reduction in the normal running costs of the conveyor machine; furthermore, as a result of the independent mounting of the individual pallets, should one pallet break, one is not obliged to replace the corresponding pallet fixed to the opposite plate of the same chain link.

A further advantage of the present invention is due to the fact that, in the present form of construction, the dimensions of the support plate of the pallet can be independent of the dimensions of the chain; the possibility of producing a support plate with greater dimensions than those of known solutions ensures the solidity and robustness of the pallet itself.

It is understood that the description supplied herein is solely an unlimited example (for instance in the form of construction described above the pallets 65 are mounted on the outer plates 60 of the chain; however it is also possible to mount further pallets to the inner plates 50 as suits the material to be transported) such that possible variations in the construction details of the production form described above will not affect the protective framework afforded to the invention as claimed hereinafter.

## Claims

1) An improved scraping conveyor chain designed to draw loose materials over a transportation channel (90) situated below, characterised by the fact that it features a plurality of lateral pallets (65) perpendicular to the chain links, with each pallet (65) mounted immovably at one end of a corresponding link of the aforementioned chain.

2) An improved scraping conveyor chain as in claim 1, characterised by the fact that the aforementioned lateral pallets (65) are composed of an attachment plate (66) and a conveyor vane (67).

3) An improved scraping conveyor chain as in claim 2, characterised by the fact that the abovementioned attachment plate (66) is of greater height than the height of the chain link, and featues a central seat (10a) designed to be coupled by a fixed interlocking joint to a corresponding chain link.

4) An improved scraping conveyor chain as in claim 1, characterised by the fact that the aforementioned pallets (65) are made of synthetic resin.

5) An improved scraping conveyor chain as in claims 1 and 3, characterised by the fact that the aforesaid pallets (65) are correspondingly mounted immovably, using fixing means (80), to the previously mentioned external plates (60).

6) An improved scraping conveyor chain as in claims 1 and 3, characterised by the fact that the aboveDmentioned pallets (65) are correspondingly mounted immovably, using fixing means (80), to the aforementioned internal plates (50).

7) An improved scraping conveyor chain as in claims 1 and 5, characterised by the fact that the aboveDmentioned pallets (65) are correspondingly mounted immovably, using fixed means (80), to the aforementioned internal (50) and external (60) plates.

8) An improved scraping conveyor chain as in claim 1, characterised by the fact that the previously mentioned chain links are composed of a plurality of plate arranged in pairs respectively inner (50) and outer (60), with each pair of plates being connected to the preceding one by means of a cylindrical pin (70).

9) An improved scraping conveyor chain as in claim 5, characterised by the fact that a single bold represents the aforementioned means for immovable mounting.

**FIG.1**

**FIG.2**

**FIG.3**